# EUROPÄISCHE PATENTSCHRIFT

(11) **EP 1 275 013 B1**
(45) Veröffentlichungstag und Bekanntmachung des Hinweises auf die Patenterteilung: **02.01.2004**
(21) Anmeldenummer: 01902349.8
(22) Anmeldetag: 23.01.2001
(51) Int. Cl.: G01S 7/521, G10K 11/00, B60R 19/48, G01S 15/93, B06B 1/00

(54) **ULTRASCHALLSENSOR**
ULTRASONIC SENSOR
DETECTEUR A ULTRASONS

(30) Priorität: 17.02.2000 DE 10007050
(43) Veröffentlichungstag der Anmeldung: 15.01.2003
(73) Patentinhaber: Volkswagen Aktiengesellschaft, 38436 Wolfsburg (DE)
(72) Erfinder: FALZEWSKI, Dieter, 38102 Braunschweig (DE)
(86) Internationale Anmeldenummer: PCT/EP2001/000691
(87) Internationale Veröffentlichungsnummer: WO 2001/061375

(56) Entgegenhaltungen:
- EP-A- 0 982 196
- DE-A- 4 410 895
- DE-A- 19 752 921
- DE-A- 19 839 598
- US-A- 4 918 672

## Beschreibung

Die Erfindung bezieht sich auf einen Ultraschallsensor, insbesondere zur Verwendung bei Einparkhilfen in Kraftfahrzeugen, mit einer in einem Sensorgehäuse angeordneten Sensormembran, an der innenseitig ein piezoelektrischer Biegewandler befestigt ist, wobei die Sensormembran über erste Entkopplungsmittel in dem Sensorgehäuse angeordnet ist, und wobei zweite Entkopplungsmittel zur Vermeidung mechanischer Dämpfungswirkung vom Fahrzeug oder fremder Schwingungsübertragung auf die Sensormembran vorgesehen sind, die zwischen Sensormembran und Abdeckung des Fahrzeugteiles oder einer weiteren Schutzabdeckung angeordnet sind.

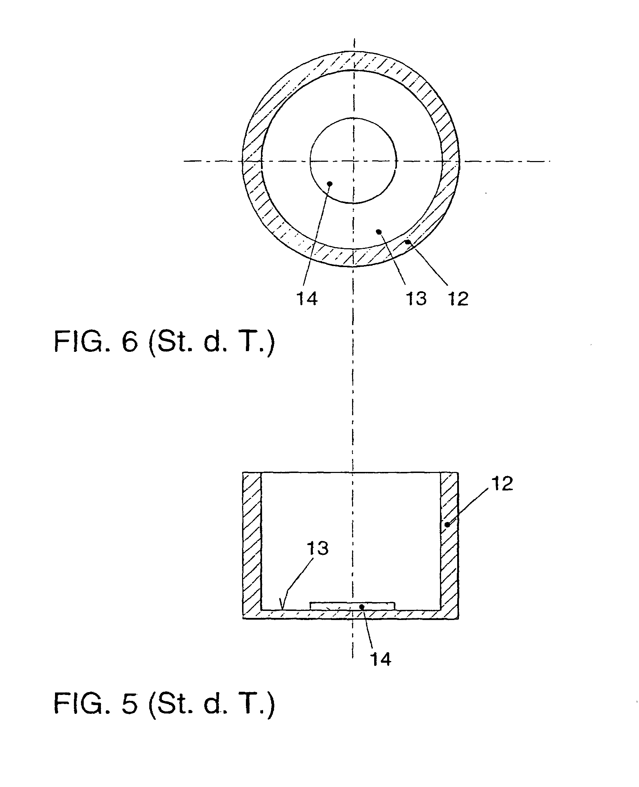

Aus dem Stand der Technik sind verschiedene Ausführungsformen von Ultraschallsensoren bekannt, die insbesondere für Einparkhilfen in Kraftfahrzeugen vorgesehen sind, z. B. aus der DE 44 108 95 A1. Bekannt sind z. B. auch derartige Sensoren, bei denen auf der Innenseite eines topfförmigen Schwingelementes, wie z. B. einer Sensormembran, ein scheibenförmiger Piezo-Biegeschwinger befestigt ist, z. B. geklebt, siehe die Figuren 5 und 6 der Zeichnung. Dieser Piezo-Biegeschwinger wird in der Sendephase des Ultraschallsensors durch eine angelegte elektrische Spannung zum Schwingen angeregt und gibt dabei akustische Ultraschall-Wellen über die Vorderseite der Sensormembran an die Umgebung ab. In der anschließenden Mikrofonphase des Sensors treffen akustische Echosignale, die z. B. dadurch entstehen, daß die ausgesandten Ultraschall-Wellen auf Hindernisse treffen, z. B. auf ein anderes parkendes Fahrzeug, und dort reflektiert werden, als Luftschwingungen auf den Sensor-Membranboden auf und führen diese Schwingung auf das Piezo-Element weiter, wobei aufgrund des Piezoeffektes an den Scheibenseiten des Piezo-Elementes eine den mechanischen Schwingungen proportionale elektrische Spannung entsteht, die nach elektronischer Aufbereitung als Parkhilfe-Signal verwertbar ist.

Die Sensormembran ist dabei z. B. mittels eines weichen Entkopplungshalters in ein Sensorgehäuse eingebaut. Dabei wird der Sensor im allgemeinen in einen Sensorhalter eingesetzt, der wiederum an geeigneter Stelle im Fahrzeug wie bspw. im Stoßfänger befestigt ist. Da aber vom Fahrzeug keine mechanische Dämpfungswirkung oder fremde Schwingungsübertragung auf die Sensormembran einwirken darf, wird bei den bisher bekannten Sensoren ein zweites Entkopplungsmittel wie Entkopplungsring, z. B. als aufgesetzter oder angespritzter Silikonring, eingesetzt. Dieser zweite Entkopplungsring sitzt dabei zwischen Sensormembran und Fahrzeugteil, wie z. B. Stoßfängerabdeckung, oder er wird in eine weitere Schutzabdeckung eingesetzt.

Eine derartige Anordnung weist verschiedene Nachteile auf. Zum einen ist nachteilig, daß der zweite Entkopplungsring eine mechanische Bedämpfung darstellt, die die Sende-Eigenschaften und die Empfangs-Eigenschaften des Ultraschallsensoren mindert. Außerdem besteht der Nachteil, daß entweder eine zweite sichtbare Fuge im Sensoreinbau erscheint oder bei anderen bekannten Aufbauten mit ungeschützter Membran die Gefahr besteht, daß durch Fertigungstoleranzen im Sensor, im Sensorhalter, im Stoßfänger, durch Materialausdehnungen usw. eine meßwertverfälschende Kompression des zweiten Entkopplungsrings auftreten kann. Ein weiterer gravierender Nachteil besteht darin, daß in die Spalte zwischen Sensormembran und Umgebung Schmutzpartikel oder Eis eindringen kann, und dadurch die Messungen der Einparkhilfe verfälschen und unbrauchbar machen könnte. Ein weiterer Nachteil ist auch, daß z. B. eine Lackierung des Sensors in Wagenfarbe bei dem bekannten Sensoraufbau aufwendig ist.

Der Erfindung liegt die Aufgabe zugrunde, die bekannten Ultraschallsensoren, insbesondere für Einparkhilfen in Kraftfahrzeugen unter Beibehaltung der bisherigen Vorteile in der Weise zu verbessern, daß eine einfache, auch in Großserie reproduzierbare Herstellung von Ultraschallsensoren ermöglicht wird, wobei der erhaltene Ultraschallsensor optisch ansprechend sein soll, Montage und Betriebsweise sollen robust sein, er soll gute Fähigkeiten zur Einfärbung und gute sensorische Eigenschaften bei einem guten Preis-Leistungsverhältnis aufweisen und der Verbau der Sensoren in Kraftfahrzeugen soll einfacher und sicherer werden.

Die Aufgabe wird erfindungsgemäß dadurch gelöst, daß die zweiten Entkopplungsmittel aus einem zwischen Sensormembran und einer diese umgebende, als Schutzabdeckung dienende Schutzwand befindlichen feinen Luftspalt bestehen, und daß vorderseitig auf der Sensormembran eine die als feiner Luftspalt ausgebildeten zweiten Entkopplungsmittel und Teile der Schutzwand überragende Folie aufgebracht ist. Die Folie ist also auf der Sensormembran und Teilen der Schutzwand aufgebracht, und überdeckt und schützt den entkoppelnden Luftspalt. Auf diese Weise wird erstmalig mit einfachen Mitteln ein einfach herstellbarer, auch in Großserie reproduzierbarer Ultraschallsensor geschaffen, mit einer ansprechenden optischen Ausgestaltung, robuster Montage und Betriebsweise, mit guten Fähigkeiten zur Einfärbung und guten sensorischen Eigenschaften. Es wird dabei ein einfacherer und sicherer Verbau als bisher in Kraftfahrzeugen ermöglicht. Dabei ist eine kostengünstige Herstellung realisiert. Ein Vorteil der erfindungsgemäßen Anordnung liegt insbesondere darin, daß nur ein einziger Spalt von außen sichtbar ist. Da dieser zwischen einem geschützten Sensorteil und einem Fahrzeugteil, wie z. B. Stoßfängerabdeckung liegt, kann er bei einer sicheren Sensor-Betriebsweise auch mit geringeren Bauteiltoleranzen und somit kleinerem Spaltdurchmesser ausgeführt werden, er besitzt deshalb eine ansprechendere Optik als eine Anordnung mit einem größeren Spalt. Weiterhin vorteilhaft ist, daß zwischen Sensormembran und Umgebung keine Schmutzpartikel oder Eis in die Anordnung eintreten können. Das allgemeine Vereisungsverhalten wird auch vermindert. Ein weiterer Vorteil besteht darin, daß bei der erfindungsgemäßen Anordnung die Lackierfähigkeit, z. B. in Wagenfarbe einfacher, sicherer, mit besserer Farbanpassung und auch kostengünstiger realisierbar ist. So kann z. B. die Folie vor dem Aufbringvorgang, wie bspw. Klebevorgang, gefärbt oder lackiert werden. Bei herkömmlichen Sensoraufbauten hingegen sind Nacharbeiten bei Lackierungen, die bei einem nicht unerheblichen Teil der Fertigung notwendig sind, aufwendig und kostenintensiv.

Bei der bevorzugten Ausführungsform der vorliegenden Erfindung ist die die als feiner Luftspalt ausgebildeten zweiten Entkopplungsmittel und Teile der Schutzwand überragende Folie vorderseitig auf der Sensormembran und Teilen der Schutzwand aufgeklebt. Eine derartige Anbringung ist in einfacher Weise durchführbar.

Nach einem weiteren Ausgestaltungsmerkmal der vorliegenden Erfindung besteht die auf der Sensormembran und Teilen der Schutzwand befindliche Folie aus Metall.

Bei einer anderen Ausführungsform gemäß der vorliegenden Erfindung besteht die auf der Sensormembran und Teilen der Schutzwand befindliche Folie aus Kunststoff.

Zweckmäßig ist es, daß die auf der Sensormembran und Teilen der Schutzwand befindliche Folie farblich, z. B. mittels Lackierung, an das diese umgebende Fahrzeugteil angepaßt ausgebildet ist. Es wird dadurch das optische Erscheinungsbild der erfindungsgemäßen Anordnung zusätzlich verbessert.

Gemäß einem weiteren Ausgestaltungsmerkmal der vorliegenden Erfindung deckt die vorderseitige Folie die Sensormembran und die Schutzwand deckelartig ab.

Bei einer anderen Ausführungsform deckt die vorderseitige Folie die Sensormembran und die Schutzwand in Form einer überlappenden Tülle ab.

Die Erfindung ist in den Figuren der Zeichnung in einem Ausführungsbeispiel dargestellt. Es zeigen:
Fig. 1 eine schematische Seitenansicht des erfindungsgemäßen Ultraschallsensors mit teilweise eingesetzter Sensormembran,
Fig. 2 eine schematische Draufsicht auf den erfindungsgemäßen Ultraschallsensor,
Fig.3 eine schematische, perspektivische Ansicht eines erfindungsgemäßen Ultraschallsensoren,
Fig.4 eine schematische, perspektivische Ansicht eines herkömmlichen Ultraschallsensoren,
Fig. 5 eine schematische, weggebrochene Seitenansicht einer herkömmlichen Sensormembran,
Fig. 6 eine schematische Draufsicht auf die herkömmliche Sensormembran gemäß Fig. 5.

Der erfindungsgemäße Ultraschallsensor ist generell mit 10 bezeichnet. Dieser Ultraschallsensor 10 dient insbesondere zur Verwendung bei Einparkhilfen in Kraftfahrzeugen. Der Ultraschallsensor 10 weist in dem dargestellten Ausführungsbeispiel eine im wesentlichen topfförmige, in einem Sensorgehäuse 11 angeordnete Sensormembran 12 auf, an deren Boden 13 ein piezoelektrischer Biegewandler 14 befestigt ist. Die Sensormembran 12 ist dabei über erste Entkopplungsmittel 15 wie bspw. einem weichen Entkopplungshalter in dem Sensorgehäuse 11 angeordnet. Außerdem sind bei dem erfindungsgemäßen Ultraschallsensor 10 zweite Entkopplungsmittel 16 zur Vermeidung mechanischer Dämpfungswirkung vom Fahrzeug oder fremder Schwingungsübertragung auf die Sensormembran 12 vorgesehen, die zwischen der Sensormembran 12 und der Abdeckung des Fahrzeugteiles oder einer weiteren Schutzabdeckung angeordnet sind.

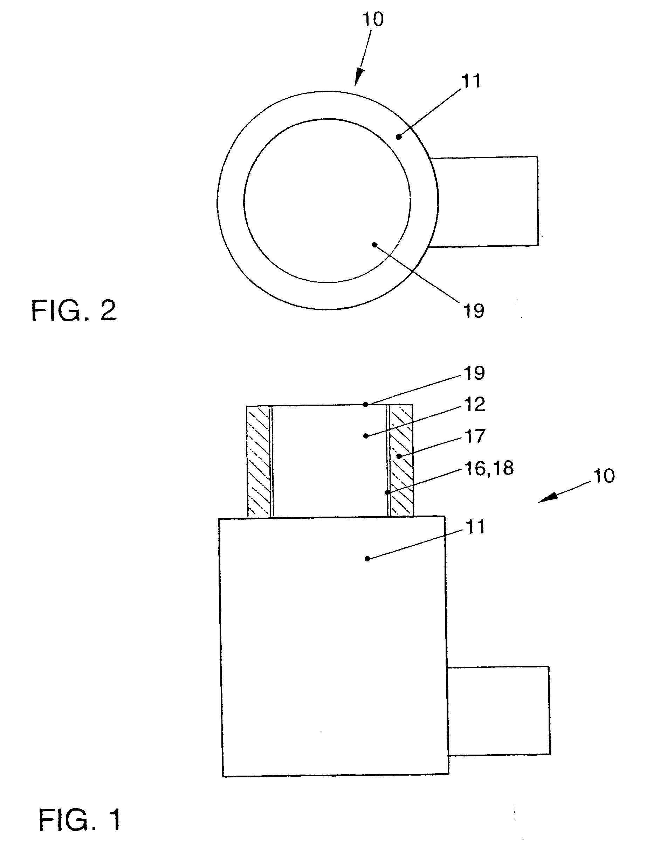

Die zweiten Entkopplungsmittel 16 bestehen dabei aus einem zwischen Sensormembran 12 und einer diese umgebende, als Schutzabdeckung dienende Schutzwand 17 befindlichen feinen Luftspalt 18, siehe insbesondere die Fig. 1 der Zeichnung. Die Schutzwand 17 kann z. B. aus Kunststoff bestehen. Es ist dabei vorderseitig auf der Sensormembran 12 eine die als feiner Luftspalt 18 ausgebildeten zweiten Entkopplungsmittel 16 und Teile der Schutzwand 17 überragende Folie 19 aufgebracht. Die die als feiner Luftspalt 18 ausgebildeten zweiten Entkopplungsmittel 16 und Teile der Schutzwand 17 überragende Folie 19 kann dabei vorderseitig auf der Sensormembran 12 und auf Teilen der Schutzwand 17 aufgeklebt sein. Die auf der Sensormembran 12 und Teilen der Schutzwand 17 befindliche Folie 19 kann dabei z. B. aus Metall oder Kunststoff bestehen.

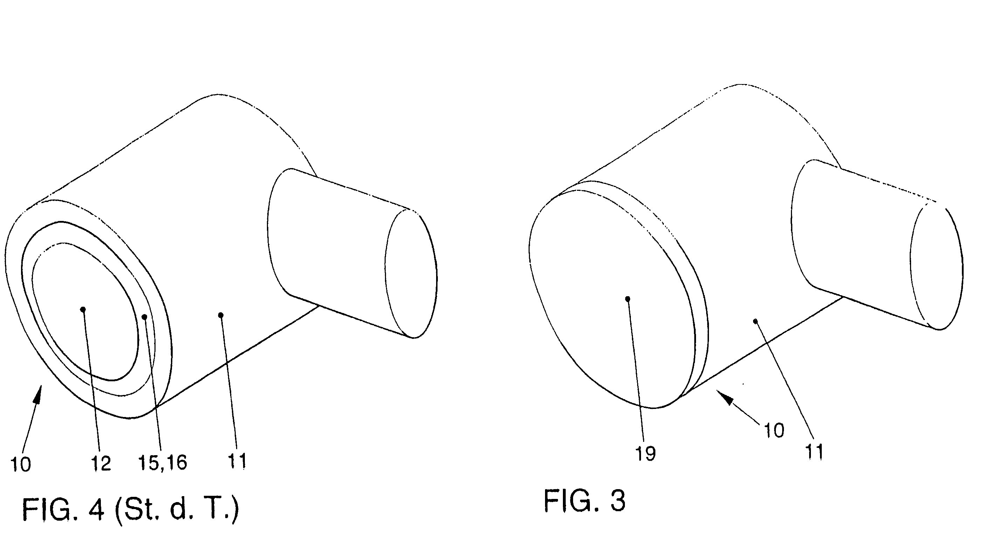

Die auf der Sensormembran 12 und Teilen der Schutzwand 17 befindliche Folie 19 kann farblich, z. B. mittels einer Lackierung, an das den Ultraschallsensor 10 umgebende Fahrzeugteil angepaßt ausgebildet sein. Weiterhin kann die vorderseitige Folie 19 die Sensormembran 12 und die Schutzwand 17 deckelartig abdecken. Alternativ dazu kann, siehe die Fig. 3 der Zeichnung, die vorderseitige Folie 19 die Sensormembran 12 und die Schutzwand 17 in Form einer überlappenden Tülle abdecken.

Mit dem erfindungsgemäßen Ultraschallsensor 10 ist eine einfache, auch in Großserie reproduzierbare Herstellung möglich, wobei der erfindungsgemäße Sensor eine ansprechende Optik aufweist, in Montage und Betriebsweise robust ist, und mit guten Fähigkeiten zur Einfärbung und guten sensorischen Eigenschaften ausgestattet ist. Der Verbau im Kraftrfahrzeug ist einfacher und sicherer als bisher. Die Herstellung ist dabei preisgünstig realisierbar. Der Vorteil der erfindungsgemäßen Anordnung ist insbesondere, daß nur ein einziger Spalt sichtbar ist. Durch seine Anordnung zwischen einem geschützten Sensorteil und einem Fahrzeugteil, wie z. B. Stoßfängerabdeckung, kann er bei sicherer Sensor-Betriebsweise auch mit geringeren Bauteiltoleranzen und somit kleinerem Spaltdurchmesser ausgeführt werden und besitzt somit ein ansprechenderes Aussehen als eine Anordnung mit größerem Spalt. Weitere Vorteile ergeben sich dadurch, daß zwischen Sensormembran und Umgebung keine Schmutzpartikel oder Eis eintreten können. Weiterhin wird die Lackierfähigkeit, z. B. in Wagenfarbe, durch die erfindungsgemäße Ausgestaltung verbessert, so ist diese einfacher, sicherer, mit besserer Farbanpassung und auch kostengünstiger realisierbar. So kann z. B. die Folie 19 vor dem Klebevorgang gefärbt oder lackiert werden. Demgegenüber sind bei herkömmlichen Sensoraufbauten Nacharbeiten bei Lackierungen, die in vielen Fällen der Fertigung notwendig sind, aufwendig und kostenintensiv.

Wie bereits erwähnt, sind die dargestellten Ausführungsformen nur bspw. Verwirklichungen der Erfindung, diese ist nicht darauf beschränkt, es sind vielmehr noch mancherlei Abänderungen und Ausbildungen möglich. So können insbesondere die Sensormembran 12 und die damit zusammenwirkenden ersten und zweiten Entkopplungsmittel 15 und 16 eine von den Fig. der Zeichnung abweichende Ausgestaltung aufweisen. Weiterhin denkbar sind Variationen in der Form und Größe des die Sensormembran 12 aufnehmenden Sensorgehäuses 11.

### BEZUGSZEICHENLISTE

- 10: Ultraschailsensor
- 11: Sensorgehäuse
- 12: Sensormembran
- 13: Boden (von 12)
- 14: piezoelektrischer Biegewandler
- 15: erste Entkopplungsmittel
- 16: zweite Entkopplungsmittel
- 17: Schutzwand
- 18: Luftspalt
- 19: Folie

## Patentansprüche

1. Ultraschallsensor (10), zur Verwendung bei Einparkhilfen in Kraftfahrzeugen, mit einer in einem Sensorgehäuse (11) angeordneten Sensormembran (12), an der innenseitig ein piezoelektrischer Wandler (14) befestigt ist, wobei die Sensormembran (12) über erste Entkopplungsmittel (15) in dem Sensorgehäuse (11) angeordnet ist, und wobei zweite Entkopplungsmittel (16) zur Vermeidung mechanischer Dämpfungswirkung vom Fahrzeug oder fremder Schwingungsübertragung auf die Sensormembran (12) vorgesehen sind, die zwischen Sensormembran (12) und Abdeckung des Fahrzeugteiles oder einer weiteren Schutzabdeckung angeordnet sind, **dadurch gekennzeichnet, daß** die zweiten Entkopplungsmittel (16) aus einem zwischen Sensormembran (12) und einer diese umgebende, als Schutzabdeckung dienende Schutzwand (17) befindlichen feinen Luftspalt (18) bestehen, und daß vorderseitig auf der Sensormembran (12) eine die als feiner Luftspalt (18) ausgebildeten zweiten Entkopplungsmittel (16) und Teile der Schutzwand (17) überragende Folie (19) aufgebracht ist.

2. Ultraschallsensor nach Anspruch 1, **dadurch gekennzeichnet, daß** die die als feiner Luftspalt (18) ausgebildeten zweiten Entkopplungsmittel (16) und Teile der Schutzwand (17) überragende Folie (19) vorderseitig auf der Sensormembran (12) und Teilen der Schutzwand (17) aufgeklebt ist.

3. Ultraschallsensor nach einem der Ansprüche 1 oder 2, **dadurch gekennzeichnet, daß** die auf der Sensormembran (12) und Teilen der Schutzwand (17) befindliche Folie (19) aus Metall besteht.

4. Ultraschallsensor nach einem der Ansprüche 1 oder 2, **dadurch gekennzeichnet, daß** die auf der Sensormembran (12) und Teilen der Schutzwand (17) befindliche Folie (19) aus Kunststoff besteht.

5. Ultraschallsensor nach einem der Ansprüche 1 bis 4, **dadurch gekennzeichnet, daß** die auf der Sensormembran (12) und Teilen der Schutzwand (17) befindliche Folie (19) farblich, z. B. mittels Lackierung, an das diese umgebende Fahrzeugteil angepaßt ausgebildet ist.

6. Ultraschallsensor nach einem der Ansprüche 1 bis 5, **dadurch gekennzeichnet, daß** die vorderseitige Folie (19) die Sensormembran (12) und Teile der Schutzwand (17) deckelartig abdeckt.

7. Ultraschallsensor nach einem der Ansprüche 1 bis 5, **dadurch gekennzeichnet, daß** die vorderseitige Folie (19) die Sensormembran (12) und Teile der Schutzwand (17) in Form einer überlappenden Tülle abdeckt.

## Claims

1. Ultrasonic sensor (10) for use in parking aids in motor vehicles, having a sensor diaphragm (12) which is arranged in a sensor housing (11) and to which a piezoelectric transducer (14) is mounted on the inside, the sensor diaphragm (12) being arranged in the sensor housing (11) by means of first decoupling means (15), and second decoupling means (16) being provided in order to avoid a mechanical damping effect of the vehicle or of the transmission of external vibrations onto the sensor diaphragm (12), said second decoupling means being arranged between the sensor diaphragm (12) and the cover of the vehicle component or a further protective cover, **characterized in that** the second decoupling means (16) are composed of a fine air gap (18) which is located between the sensor diaphragm (12) and a protective wall (17) which surrounds the latter and serves as a protective cover, and **in that** a film (19) which projects beyond the second decoupling means (16) which are embodied as a fine air gap (18) and parts of the protective wall (17) is applied to the front side of the sensor diaphragm (12).

2. Ultrasonic sensor according to Claim 1, **characterized in that** the film (19) which projects beyond the second decoupling means (16) which are embodied as a fine air gap (18) and parts of the protective wall (17) is bonded onto the front side of the sensor diaphragm (12) and parts of the protective wall (17) .

3. Ultrasonic sensor according to one of Claims 1 or 2, **characterized in that** the film (19) which is located on the sensor diaphragm (12) and parts of the protective wall (17) is composed of metal.

4. Ultrasonic sensor according to one of Claims 1 or 2, **characterized in that** the film (19) which is located on the sensor diaphragm (12) and parts of the protective wall (17) is composed of plastic.

5. Ultrasonic sensor according to one of Claims 1 to 4, **characterized in that** the film (19) which is located on the sensor diaphragm (12) and parts of the protective wall (17) is matched in terms of colour, for example by means of surface coating, to the part of the vehicle which surrounds it.

6. Ultrasonic sensor according to one of Claims 1 to 5, **characterized in that** the film (19) on the front side covers the sensor diaphragm (12) and parts of the protective wall (17) in the manner of a lid.

7. Ultrasonic sensor according to one of Claims 1 to 5, **characterized in that** the film (19) on the front side covers the sensor diaphragm (12) and parts of the protective wall (17) in the form of an overlapping bush.

## Revendications

1. Détecteur à ultrasons (10) destiné à être employé dans les aides au stationnement dans des véhicules à moteur, avec une membrane à détecteur (12) disposée dans un boîtier de détecteur (11), à laquelle est fixé du côté intérieur un transducteur piézoélectrique (14), la membrane à détecteur (12) étant disposée sur des premiers moyens de découplage (15) dans le boîtier de détecteur (11), et des deuxièmes moyens de découplage (16) étant prévus pour éviter un effet d'amortissement mécanique, provenant du véhicule ou une transmission de vibration externe sur la membrane à détecteur (12), moyens qui sont disposés entre la membrane à détecteur (12) et le cache de la pièce de véhicule ou un autre cache protecteur, **caractérisé en ce que** les deuxièmes moyens de découplage (16) sont constitués d'une fente d'air fine (18) se trouvant entre la membrane à détecteur (12) et une paroi protectrice (17) entourant celle-ci, servant de cache protecteur, et **en ce que**, du côté avant sur la membrane à détecteur (12), est appliquée une feuille (19) dépassant les deuxièmes moyens de découplage (16) formés en tant que fente d'air fine (18) et des portions de la paroi protectrice (17).

2. Détecteur à ultrasons selon la revendication 1, **caractérisé en ce que** la feuille (19) dépassant les deuxièmes moyens de découplage (16) formés en tant que fente d'air fine (18) et des portions de la paroi protectrice (17) est collée du côté avant sur la membrane à détecteur (12) et sur des portions de la paroi protectrice (17).

3. Détecteur à ultrasons selon l'une quelconque des revendications 1 ou 2, **caractérisé en ce que** la feuille (19) se trouvant sur la membrane à détecteur (12) et sur des portions de la paroi protectrice (17) est constituée de métal.

4. Détecteur à ultrasons selon l'une quelconque des revendications 1 ou 2, **caractérisé en ce que** la feuille (19) se trouvant sur la membrane à détecteur (12) et sur des portions de la paroi protectrice (17) est constituée de matière plastique.

5. Détecteur à ultrasons selon l'une quelconque des revendications 1 à 4, **caractérisé en ce que** la feuille (19) se trouvant sur la membrane à détecteur (12) et sur des portions de la paroi protectrice (17) est formée avec une couleur, par exemple au moyen d'un laquage, adaptée à la pièce de véhicule entourant celle-ci.

6. Détecteur à ultrasons selon l'une quelconque des revendications 1 à 5, **caractérisé en ce que** la feuille du côté avant (19) recouvre à la manière d'un couvercle la membrane à détecteur (12) et des portions de la paroi protectrice (17).

7. Détecteur à ultrasons selon l'une quelconque des revendications 1 à 5, **caractérisé en ce que** la feuille du côté avant (19) recouvre la membrane à détecteur (12) et des portions de la paroi protectrice (17) sous forme d'une douille qui les recouvre.
